Europäisches Patentamt

European Patent Office

Office européen des brevets

(11) Veröffentlichungsnummer: **0 177 482**
A2

## (12) EUROPÄISCHE PATENTANMELDUNG

(21) Anmeldenummer: **85890231.5**

(22) Anmeldetag: **24.09.85**

(51) Int. Cl.⁴: **B 60 S 9/12**

(30) Priorität: **24.09.84 AT 3017/84**

(43) Veröffentlichungstag der Anmeldung:
**09.04.86 Patentblatt 86/15**

(84) Benannte Vertragsstaaten:
**BE CH DE FR GB IT LI LU NL SE**

(71) Anmelder: **"NEUSON" Hydraulik Gesellschaft m.b.H. u. Co. KG**
**Industriestrasse 5**
**A-4061 Pasching(AT)**

(72) Erfinder: **Neunteufel, Hans**
**Kampmüllerweg 38**
**A-4040 Linz(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) Vorrichtung zum Abstützen, Heben und Senken von Sattelanhängern.

(57) Die Vorrichtung besteht aus Stützfüßen (1) mit beidseitig beaufschlagbare Kolben (3) aufweisenden Zylinder-Kolbeneinheiten (2, 3) zum Ein- und Ausfahren von Hubstempeln (4), wobei für eine pneumatisch-hydraulische Verstellung der Kolben (3) im Schnellgang ein von einer Druckluftleitung (21, 23) beaufschlagter Flüssigkeitsbehälter (18) mit den Zylinderräumen (6, 7) über Leitungen (8, 16, 17) und Absperr- oder Umsteuerorgange verbunden und zusätzlich ein pneumatisch-hydraulischer Druckumsetzer (25) vorgesehen ist, über den die Zylinderräume (6, 7) mit Druckflüssigkeit beaufschlagbar sind, die einen gegenüber der Druckluft erhöhten Druck aufweist. Zur Vereinfachung der gesamten Vorrichtung und ihrer Bedienung sowie zur Erhöhung der Betriebssicherheit sind die Kolben (3) der Zylinder-Kolbeneinheiten (2, 3) als Differenzkolben mit zu dem im Ausfahrsinn beaufschlagbaren Zylinderraum (7) weisender, größerer Beaufschlagungsfläche ausgebildet und beide Zylinderräume (6, 7) sind über Leitungen (8, 9, 14, 16, 17) und ein Umsteuerorgan wechselweise direkt mit einem einzigen durch Druckluft beaufschlagten Flüssigkeitsbehälter und einem ebenfalls von diesem Flüssigkeitsbehälter (18) ausgehenden Leitungszweig (17) verbindbar, in den der pneumatisch-hydraulische Druckumsetzer (25) fördert.

EP 0 177 482 A2

## Vorrichtung zum Abstützen, Heben und Senken von Sattelanhängern

Die Erfindung betrifft eine Vorrichtung zum Abstützen, Heben und Senken von Sattelanhängern am Aufsattelende, bestehend aus Stützfüßen mit beidseitig beaufschlagbare Kolben aufweisenden Zylinder-Kolbeneinheiten zum Ein- und Ausfahren von Hubstempeln, wobei für eine pneumatisch-hydraulische Verstellung der Kolben im Schnellgang ein von einer Druckluftleitung beaufschlagter Flüssigkeitsbehälter mit den Zylinderräumen über Leitungen und Absperr- bzw. Umsteuerorgane verbunden und zusätzlich ein pneumatisch-hydraulischer Druckumsetzer vorgesehen ist, über den die Zylinderräume mit Druckflüssigkeit beaufschlagbar sind, die einen gegenüber der Druckluft erhöhten Druck aufweist.

Vorrichtungen dieser Art dienen zum Anheben des Aufsattelendes des Sattelanhängers beim Aufsatteln auf den oder beim Ausfahren des Sattelschleppers und zur Abstützung des Aufsattelendes im abgekuppelten Zustand des Sattelanhängers. Sie werden vorteilhaft mit der für die Bremsanlage ohnehin benötigten Druckluft betrieben. Um während der Fahrt eine genügende Bodenfreiheit einzuhalten, ist es notwendig, die Stützfüße verhältnismäßig hoch über die Abstützstellung anhebbar auszubilden. Aus der normalen, ruhenden Abstützstellung in die Aufsattelstellung ist meist nur ein relativ kleiner Hubweg zurückzulegen. Auch das Absenken in die Kupplungsstellung mit dem Sattelschlepper erfordert meist nur geringe Hubwege. Vorrichtungen der gegenständlichen Art sollen es ermöglichen, das Aus- und Einfahren der Stützfüße bis zur Bodenberührung bzw. aus der Bodenberührung in die voll eingefahrene Stellung im Schnellgang durchzuführen, wobei trotzdem die Möglichkeit bestehen soll, die Arbeitshübe aus der Stützstellung in die Kupplungsstellung und das Absenken aus der Kupplungsstellung in die Stützstellung durchzuführen, ohne daß dazu übermäßig große Kolbenflächen bzw. Zylinderquerschnitte benötigt werden.

Bei einer bekannten Vorrichtung sind für die Beaufschlagung der Zylinder-Kolbeneinheiten drei verschiedene Kreisläufe vorgesehen. Dabei führen von einem Flüssigkeitsvorratsbehälter, der zum Teil mit Luft und zum Teil mit Flüssigkeit gefüllt ist, zwei Kreisläufe für die Schnellgangbetätigung der Zylinder-Kolbeneinheiten in beiden Richtungen heraus. Für das Ausfahren wird eine Abzapfung unterhalb des Flüssigkeitsspiegels vorgenommen, so daß die Kolben durch Beaufschlagung mit Druckflüssigkeit ausgefahren werden. Für die Rückstellung können die anderen Kolbenseiten über den im Luftpolsterbereich des Vorratsbehälters mündenden Kreislauf beaufschlagt werden. Der pneumatisch-hydraulische Druckumsetzer liegt in einem eigenen Kreislauf, der mit einem gesonderten Flüssigkeitsvorratsbehälter versehen ist. Für die Arbeitshübe nach der Schnellgangverstellung im Ausfahrsinn werden die zum Luft-Flüssigkeitsvorratsbehälter führenden Leitungen gesperrt und es erfolgt dann eine Beaufschlagung ausschließlich über die vom Druckumsetzer kommenden Leitungen. Der Druckumsetzer selbst wird meist als Kolben- oder Tauchkolbenpumpe ausgebildet, die von dem eigenen Flüssigkeitsvorratsbehälter her ansaugt und in die zu den Zylinder-Kolbeneinheiten führende zusätzliche Leitung fördert. Die Pumpe wird von einem pneumatisch betätigbaren Kolben angetrieben, der über ein von Hand aus gesteuertes Umsteuerorgan wahlweise im Ansaug- bzw. Fördersinn der Kolbenpumpe mit Druckluft beaufschlagt werden kann, wobei jeweils an der anderen Kolbenseite des pneumatischen Betätigungskolbens der Luftdruck abgebaut wird. Das Flächenverhältnis des pneumatischen Betätigungskolbens zum Kolben der Kolbenpumpe bestimmt den erzeugbaren Überdruck in der Druckflüssigkeit.

Nachteilig bei dieser bekannten Vorrichtung sind die vielen gesonderten Flüssigkeits- bzw. Luftkreisläufe und die dafür erforderlichen Leitungen, die vorgesehene einseitige Beaufschlagung der Kolben der Zylinder-Kolbeneinheiten mit Luft, was zur Korrosion führen kann, da die aus der Bremsanlage zur Verfügung stehende Druckluft nicht flüssigkeitsfrei ist, die Vielzahl verschiedener, für die einzelnen Arbeitsgänge von Hand aus zu betätigender Absperr- und Umsteuerorgane, die bei einem einzigen Hebe- oder Senkvorgang in verschiedenen Zeitabständen betätigt werden müssen, die notwendige Handsteuerung des Druckumsetzers und schließlich der sich durch den gesonderten Druckumsetzerkreislauf und den zusätzlichen Druckflüssigkeitsbehälter ergebende Aufwand. Wegen der Vielzahl der zu verschiedenen Zeiten zu betätigenden Absperr- und Umsteuerorgane ergeben sich Anlernschwierigkeiten für den Benutzer. Beim Ausfahren der Kolben der Zylinder-Kolbeneinheiten im Schnellgang besteht ferner die Möglichkeit, daß der Kolben mit dem Stützfuß unter seinem Eigenwicht gegenüber der Sollage voreilt, was zu Beschädigungen führen kann und eine Gefährdung für das Bedienungspersonal darstellt.

Die aufgezeigten Nachteile werden bei einer bekannten Vorrichtung der eingangs genannten Art gemäß der US-A-4 318 550 nur zum Teil beseitigt. Bei dieser Konstruktion ist vorgesehen, die beiden Zylinderräume der Zylinder-Kolbeneinheiten sowohl im Schnellgang als auch beim Arbeitshub nur mit Flüssigkeit zu beaufschlagen, so daß die Korrosionsgefährdung wenigstens zum Teil beseitigt wird. Die Kolben der Zylinder-Kolbeneinheiten besitzen für das Ein- und Ausfahren etwa gleich große Kolbenflächen. Die jeweils nicht beaufschlagten Zylinderräume, von denen das hydrauliche Medium abgeleitet wird, sollen weitgehend drucklos gemacht werden. Um dies zu erreichen, sind den jeweils gleichsinnig zu beaufschlagenden Zylinderraumpaaren zwei gesonderte Flüssigkeitsbehälter zugeordnet, in denen die zu den Zylin-

- 4 -

0177482

derräumen führenden Leitungen unterhalb des Flüssigkeitsspiegels münden, wobei wieder Luftleitungen vorgesehen sind,
die wechselweise mit der Druckluftleitung bzw. einem Auslaß verbunden werden können. Zur Erfüllung der notwendigen
Steuerfunktionen werden Mehrweghähne vorgesehen und es ist
notwendig, alle Verbindungsleitungen mit Rückschlagventilen
auszustatten. Ein weiterer Mehrweghahn dient wieder zur
Handbetätigung des Druckumsetzers. Nicht einmal die angestrebte Verringerung der Korrosionsgefahr wird bei der
beschriebenen Konstruktion tatsächlich beseitigt, da sich
bei der Entspannung der die beiden Vorratsbehälter beaufschlagenden Druckluft Kondenswasser bilden und niederschlagen kann, das dann in die Leitungen gelangt. Alle übrigen
weiter oben beschriebenen Nachteile bleiben erhalten.

Aufgabe der Erfindung ist die Schaffung einer Vorrichtung
der eingangs genannten Art, bei der mit einem Minimum an
Leitungen, Absperr- und Umsteuerorganen und sonstigem
Aufwand das Auslangen gefunden wird, die einfach in der
Bedienung ist und eine große Betriebssicherheit sowie hohe
Lebenserwartung aufweist.

Eine erfindungsgemäße Vorrichtung ist dadurch gekennzeichnet, daß die Kolben der Zylinder-Kolbeneinheiten als
Differenzkolben mit zu dem im Ausfahrsinn beaufschlagbaren
Zylinderraum weisender, größerer Beaufschlagungsfläche ausgebildet sind und daß beide Zylinderräume über Leitungen und
ein Umsteuerorgan wechselweise direkt mit einem einzigen
durch Druckluft beaufschlagten Flüssigkeitsbehälter und
einem ebenfalls von diesem Flüssigkeitsbehälter ausgehenden
Leitungszweig verbindbar sind, in den der pneumatisch-
hydraulische Druckumsetzer fördert.

Die Erfindung ermöglicht es mit wenig Leitungen und Umsteuerorganen sowie nur mit einem einzigen Flüssigkeitsbehälter das Auslagen zu finden. Für das Ausfahren der Kolben im Schnellgang kann die sich durch die Differenz der Kolbenflächen ergebende Kraft ausgenützt werden, wenn beide Kolbenseiten mit unter gleichem Druck stehender Flüssigkeit beaufschlagt werden, wobei dieser Druck normalerweise der Druck der Druckluft ist. Für den jeweiligen Arbeitshub kann über die gleichen Leitungen Druckflüssigkeit vom Druckumsetzer mit erhöhtem Druck den größeren Kolbenbeaufschlagungsflächen zugeführt werden. Für das Absenken legt man die die größeren Kolbenflächen beaufschlagenden Zylinderräume an die unmittelbar zum Flüssigkeitsbehälter führende Leitung und beaufschlagt die kleineren Kolbenflächen mit der vom Druckumsetzer auf erhöhten Druck gebrachten Druckflüssigkeit. Da hier mit relativ hohem Überdruck gearbeitet werden kann, kann man mit kleinen Kolbenflächen und damit kleinen Zylinderräumen an dieser Seite arbeiten, so daß das Einfahren der Kolben und damit Stützfüße im Schnellgang möglich wird. Es ist nicht notwendig, wie bei allen bisherigen Konstruktionen, den sich beim jeweiligen Arbeitsschritt verkleinernden Zylinderraum drucklos zu machen. Dadurch kann es auch nicht zur Kondenswasserbildung beim Entspannen der Druckluft kommen und beim Ausfahren der Stützfüße im Schnellgang wird trotzdem verhindert, daß diese Stützfüße der durch die Beaufschlagung gegebenen Sollage unter ihrem Eigengewicht voreilen, so daß die bisherige Unfall- und Verletzungsgefahr beseitigt ist.

Nach einer Weiterbildung ist der Druckumsetzer, wie dies an und für sich bekannt ist, als Kolbenpumpe mit beidseitig pneumatisch beaufschlagbarem Betätigungskolben ausgebildet. Es ist aber erfindungsgemäß ein die Beaufschlagungsrichtung des Betätigungskolbens bestimmender Umsteuerschieber über Druckfühler im Leitungszweig oder an den Zylinderräumen des Betätigungskolbens selbsttätig antreibbar bzw. ist nach einer anderen Ausführung der Umsteuerschieber über Lageschieber für den Betätigungskolben gesteuert selbsttätig antreibbar.

Durch diese Ausführung wird erreicht, daß der Druckumsetzer selbsttätig und so lange bzw. so oft in Tätigkeit tritt, als Druckflüssigkeit mit erhöhtem Druck benötigt wird, ohne daß dazu zusätzliche Maßnahmen nötig sind. Auch damit wird die Betriebssicherheit wesentlich erhöht.

Um Unebenheiten oder eine ungleichmäßige Lastaufteilung zwischen den Stützfüßen ausgleichen zu können, ist nach einer Weiterbildung wenigstens in dem einen Leitungszweig ein Dreiwegehahn angeordnet, über den gleiche Zylinderräume der Zylinder-Kolbeneinheiten wahlweise einzeln oder gemeinsam mit dem erwähnten Leitungszweig verbindbar sind, wobei bei der einzelnen Verbindung eines Zylinderraumes mit dem genannten Leitungszweig eine Relativverstellung der Kolben in den beiden Zylinderräumen gegeneinander möglich ist.

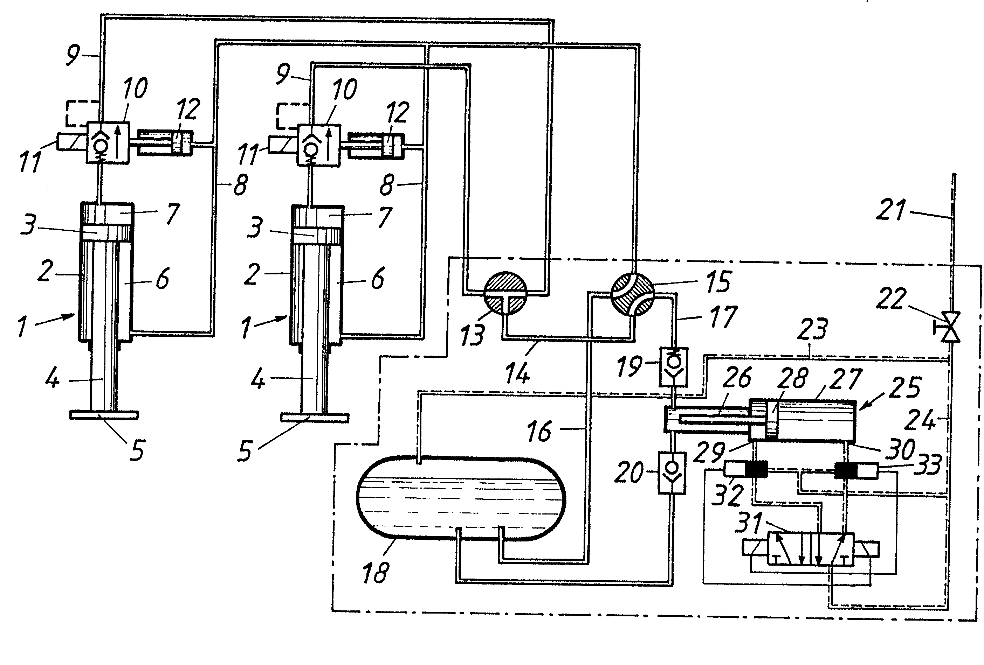

In der Zeichnung ist als Ausführungsbeispiel ein Funktionsschema einer erfindungsgemäßen Vorrichtung dargestellt.

Beim Ausführungsbeispiel sind zwei an einem Sattelanhänger in der Nähe des Aufsattelendes montierte Stützfüße 1 vorgesehen. Jeder Stützfuß 1 besitzt einen Zylinder 2, einen Kolben 3, einen ausfahrbaren Hubstempel 4 und eine Bodenstütze 5. Der Hubstempel 4 hat einen im Verhältnis zum Kolben 3 großen Querschnitt, so daß der Kolben 3 einen Differenzkolben bildet, bei dem die zum Zylinderraum 6 weisende wirksame Kolbenfläche wesentlich kleiner ist als die zum Zylinderraum 7 weisende Kolbenfläche.

Die beiden Zylinderräume 6, 7 schließen an je eine Leitung 8, 9 an. Die Leitung 9 ist vor dem Einlaß in den Zylinderraum 7 über einen Umsteuerschieber 10 geführt, der einerseits über einen Steuermagneten 11 und anderseits über einen von der Leitung 8 aus beaufschlagbaren Betätigungskolben 12 verstellbar ist und in seiner einen Stellung den Durchlaß aus der Leitung 9 in den Zylinderraum 7 freigibt, in der anderen Stellung aber in diesen Durchflußweg ein federbelastetes Rückschlagventil einschaltet. Dieses Rückschlagventil sperrt bei einem relativen Überdruck im Zylinderraum 7 den Rückfluß in die Leitung 9 und sichert damit den Stützfuß in der jeweiligen Ausfahrstellung.

Die Leitungen 9 sind zu einem von Hand aus betätigbaren Dreiwegehahn 13 geführt und können über diesen wahlweise einzeln oder gemeinsam mit einer Leitung 14 verbunden werden. Die Leitung 14 führt ihrerseits zu einem ebenfalls von Hand aus betätigbaren Vierwegehahn oder Vierwegeschieber 15, an den die Leitungen 8 gemeinsam anschließen und dessen beide anderen Anschlüsse zu Leitungszweigen 16, 17 führen, von denen der eine unmittelbar unterhalb des Flüssigkeitsspiegels in einen Vorratsbehälter mündet und der andere (17) über zwei Rückschlagventile 19, 20 führt, von denen das eine (20) im Schließsinn vorbelastet ist. Nach den Rückschlagventilen 19, 20 führt die Leitung 17 ebenfalls unter dem Flüssigkeitsspiegel in den Behälter 18. Über den Vierwegehahn 15 können die Leitungen 8, 14 wechselweise mit den Leitungen 16 und 17 verbunden werden. Eine Verbindung der Leitungszweige 14 und 17 ermöglicht über den Dreiwegehahn 13 wahlweise die einzelne oder gemeinsame Beaufschlagung der Zylinderräume 7 und damit der Kolben 3 im Ausfahrsinn.

Eine vorzugsweise vom Vorratsbehälter der Druckluft-Bremsanlage kommende Druckluftleitung 21 ist über ein Hauptabsperrorgan 22 geführt. Ein Zweig 23 der Druckluftleitung mündet im Behälter 18. Ein weiterer Zweig 24 dient für den Betrieb eines pneumatisch-hydraulischen Druckumsetzers 25, der eine Tauchkolbenpumpe 26 und einen in einem weiteren Zylinder 27 hin- und herverstellbaren Arbeitskolben 28 aufweist. Wird der Kolben 28 nach rechts verstellt, saugt die Tauchkolbenpumpe 26 bei geschlossenem Rückschlagventil 19 über das sich öffnende Rückschlagventil 20 aus dem Vorratsbehälter 18 an. Wird der Arbeitskolben 28 nach links verstellt, schließt unter dem Flüssigkeitsdruck das Rückschlagventil 20 und das Rückschlagventil 19 öffnet, so daß die Druckflüssigkeit zur jeweils angeschlossenen Leitung 14 oder 8 gelangt.

Sollen die Stützfüße 1 bei noch aufgesatteltem Sattelanhänger ausgefahren werden, dann werden der Dreiwegehahn 13 und der Vierwegehahn 15 in die dargestellte Lage gebracht. Die Schieber 10 befinden sich in der dargestellten Stellung. Wird nun das Absperrorgan 22 geöffnet, so wird der Flüssigkeitsvorratsbehälter 18 mit Druckluft beaufschlagt. Die Hubstempel 4 fahren unter ihrem Eigengewicht und unter der sich durch die Differenz der Beaufschlagungsflächen der Kolben 3 und den Leitungsruck ergebenden Kraft aus, bis die Teile 5 am Boden anstehen und dort eine entsprechende Stützkraft erzeugen. Dadurch steigt der in der Leitung 17 beidseits der Rückschlagventile 19, 20 wirksame Leitungsdruck und die Rückschlagventile 19, 20 werden schließen. Soweit bisher beschrieben wurde, ist es gleichgültig, ob während dieses Betriebes der Druckumsetzer 25 in Betrieb ist oder nicht. Man kann einen auf das Schließen des Rückschlagventiles 19 ansprechenden Druckfühler vorsehen, der den Druckumsetzer beim Schließen des Ventiles 19 einschaltet. Normalerweise läßt man aber den Druckumsetzer auch während des Anstellens der Stützfüße 1 an den Boden frei mitlaufen.

Der Zylinder 27 des Druckumsetzers hat zwei Einlässe 29, 30, die wechselweise über einen Umsteuerschieber 31 mit der Leitung 24 bzw. mit einem Auslaß verbunden werden können. Der Umsteuerschieber 31 ist pneumatisch betätigbar. Für seine Betätigung sind in den Leitungen 29, 30 liegende Druckfühler 32, 33 vorhanden, die jeweils auf die sich beim Überfahren des jeweiligen Leitungseinlasses durch den Kolben 28 ergebende Druckänderung ansprechen und den Schieber 31 pneumatisch umsteuern. Bei dem hier beschriebenen Ausführungsbeispiel wird also der Kolben 28 und die Pumpe 26 in Dauerbetrieb sein.

Nach dem Schließen des Rückschlagventiles 19 saugt die Pumpe 26 über das Rückschlagventil 20 aus dem Vorratsbehälter 18 an und gibt beim nachfolgenden Förderhub bei numehr öffnendem Rückschlagventil 19 und schließendem Rückschlagventil 20 Druckflüssigkeit auf den zum Vierweghahn 15 führenden Leitungszweig. Die Rückschlagventile in den Schiebern 10 werden wieder geöffnet und die Hubstempel 4 werden weiter ausgefahren. Ist die gewünschte Hubhöhe erreicht, kann das Absperrorgan 22 geschlossen werden, wodurch der Druck in den Leitungen absinkt und der Druckumsetzer 25 stillgesetzt wird. Die Rückschlagventile in den Schiebern 10 und auch die Rückschlagventile 19, 20 sichern die Stützfüße 1 in der jeweiligen Hubstellung.

Für das Absenken der Stützfüße kann man die Schieber 10 über die Elektromagnete 11 umsteuern, solange das Absperrorgan 22 noch geschlossen ist. Diese Art der Betätigung wird man wählen, wenn der Sattelanhänger eben mit dem Sattelschlepper unterfahren wurde. Ferner wird der Vierweghahn 15 umgestellt, so daß er nun die Leitungen 8 mit dem Leitungszweig 17 und die Leitungen 9 bzw. 14 mit dem Leitungszweig 16 verbindet. Für eine Handabsenkung kann man eine Außenbetätigung der Rückschlagventile 19, 20 vorsehen. Normalerweise wird man aber jetzt das Absperrorgan 22 öffnen, so daß die Druckluftversorgung wieder hergestellt ist und der Druckumsetzer 25 arbeitet. Die von der Leitung 8 beaufschlagten Kolben 12 sichern nun die Schieber 10 in der Rücklaufstellung und die Zylinderräume 6 werden vom Druckumsetzer 25 her im Einfahrsinn der Stützfüße 1 mit unter erhöhtem Druck stehender Druckflüssigkeit beaufschlagt. Die Zylinderräume 7 entleeren sich über die Leitungen 9, 14, den Vierwegehahn 15 und die Leitungen 16 in den Flüssigkeitsvorratsbehälter 18.

Patentansprüche

1. Vorrichtung zum Abstützen, Heben und Senken von Sattelanhängern am Aufsattelende, bestehend aus Stützfüßen (1) mit beidseitig beaufschlagbare Kolben (3) aufweisenden Zylinder-Kolbeneinheiten (2, 3) zum Ein- und Ausfahren von Hubstempeln (4), wobei für eine pneumatisch-hydraulische Verstellung der Kolben (3) im Schnellgang ein von einer Druckluftleitung (21, 23) beaufschlagter Flüssigkeitsbehälter (18) mit den Zylinderräumen (6, 7) über Leitungen (8, 16, 17) und Absperr- bzw. Umsteuerorgange (10, 13, 15) verbunden und zusätzlich ein pneumatisch-hydraulischer Druckumsetzer (25) vorgesehen ist, über den die Zylinderräume (6, 7) mit Druckflüssigkeit beaufschlagbar sind, die einen gegenüber der Druckluft erhöhten Druck aufweist, dadurch gekennzeichnet, daß die Kolben (3) der Zylinder-Kolbeneinheiten (2, 3) als Differenzkolben mit zu dem im Ausfahrsinn beaufschlagbaren Zylinderraum (7) weisender, größerer Beaufschlagungsfläche ausgebildet sind und daß beide Zylinderräume (6, 7) über Leitungen (8, 9, 14, 16, 17) und ein Umsteuerorgang (15) wechselweise direkt mit einem einzigen durch Druckluft beaufschlagten Flüssigkeitsbehälter (18) und einem ebenfalls von diesem Flüssigkeitsbehälter (18) ausgehenden Leitungszweig (17) verbindbar sind, in den der pneumatisch-hydraulische Druckumsetzer (25) fördert.

2. Vorrichtung nach Anspruch 1, dadurch gekennzeichnet, daß der Druckumsetzer (25, als Kolbenpumpe mit beidseitig pneumatisch beaufschlagbarem Betätigungskolben (28) ausgebildet ist und daß ein die Beaufschlagungsrichtung des Betätigungskolbens (28) bestimmender Umsteuerschieber (31) über Druckfühler (32, 33) im Leitungszweig oder an den Zylinderräumen des Betätigungskolbens (28) selbsttätig antreibbar ist.

3. Vorrichtung nach Anspruch 1, dadurch gekennzeichnet,
daß der Druckumsetzer (25) als Kolbenpumpe mit beidseits
pneumatisch beaufschlagbarem Betätigungskolben (28) ausgebildet ist und daß ein die Beaufschlagungsrichtung des Betätigungskolbens (28) bestimmender Umsteuerschieber (31)
über Lagefühler für den Betätigungskolben (28) gesteuert
selbsttätig antreibbar ist.

4. Vorrichtung nach einem der Ansprüche 1 bis 3, dadurch
gekennzeichnet, daß wenigstens in dem einen Leitungszweig
(9, 14) ein Dreiwegehahn (13) angeordnet ist, über den
gleiche Zylinderräume (7) der Zylinder-Kolbeneinheiten (2,
3) wahlweise einzeln oder gemeinsam mit dem Leitungszweig
(14) verbindbar sind.

0177482